(19) Europäisches Patentamt / European Patent Office / Office européen des brevets

(11) **EP 3 887 794 B1**

(12) **FASCICULE DE BREVET EUROPEEN**

(45) Date de publication et mention
de la délivrance du brevet:
**15.11.2023   Bulletin 2023/46**

(21) Numéro de dépôt: **19832568.0**

(22) Date de dépôt: **28.11.2019**

(51) Classification Internationale des Brevets (IPC):
**G01N 1/02** *(2006.01)*     **B08B 9/08** *(2006.01)*
**B08B 13/00** *(2006.01)*

(52) Classification Coopérative des Brevets (CPC):
**G01N 1/02; B08B 9/08; B08B 13/00;**
G01N 2001/028

(86) Numéro de dépôt international:
**PCT/EP2019/082974**

(87) Numéro de publication internationale:
**WO 2020/109508 (04.06.2020 Gazette 2020/23)**

(54) **DISPOSITIF DE PRELEVEMENT POUR PRELEVEMENT SUR UNE SURFACE DE CUVE INDUSTRIELLE SANS DESCENTE HUMAINE DANS UNE CUVE INDUSTRIELLE A L'AIDE D'UN ECOUVILLON**

PROBENENTNAHMEVORRICHTUNG ZUR ENTNAHME AUS EINER OBERFLÄCHE EINES INDUSTRIELLEN GEFÄSSES MIT EINEM TUPFER, OHNE DASS EINE PERSON IN EIN INDUSTRIELLES GEFÄSS HINABSTEIGEN MUSS

SAMPLING DEVICE FOR SAMPLING FROM A SURFACE OF AN INDUSTRIAL VESSEL WITHOUT REQUIRING A PERSON TO DESCEND INTO AN INDUSTRIAL VESSEL, USING A SWAB

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.11.2018   FR 1872058**

(43) Date de publication de la demande:
**06.10.2021   Bulletin 2021/40**

(73) Titulaire:**Laboratoire Français du Fractionnement et des
Biotechnologies
92800 Puteaux (FR)**

(72) Inventeurs:
• **OLIVIER, Christophe
59230 SARS ET ROSIERES (FR)**
• **DUPUIS, Olivier
59200 TOURCOING (FR)**
• **DELTOUR, Quentin
59120 LOOS (FR)**

(74) Mandataire: **Plasseraud IP
66, rue de la Chaussée d'Antin
75440 Paris Cedex 09 (FR)**

(56) Documents cités:
EP-A2- 1 054 188     WO-A1-89/11634
FR-A1- 2 677 925     GB-A- 2 274 719
US-A- 3 841 973     US-A- 5 823 592
US-A1- 2015 377 746

## Description

### Domaine technique

La présente invention concerne le domaine technique des prélèvements d'échantillon sur une surface, et plus particulièrement sur une surface de cuve industrielle sans descente humaine.

### État de la technique

Les prélèvements d'échantillon sont régulièrement effectués en industrie afin de valider les opérations de nettoyage initiale et périodique des équipements. Ces prélèvements peuvent être de différentes natures : prélèvements de résidus, prélèvements de contaminants, prélèvements microbiologiques tels que les prélèvements bactériologiques, etc. Cela concerne également les cuves industrielles. De telles cuves sont par exemple utilisées dans les industries agroalimentaire, cosmétique, pharmaceutique, etc.

Les prélèvements sont réalisés à l'aide d'écouvillons. Un écouvillon est un outil comprenant une tige et un embout de prélèvement à une extrémité de la tige. L'embout peut être de forme plate ou de révolution (comme un coton-tige). L'aire de la surface sur laquelle le prélèvement est réalisé est généralement un carré et typiquement de 5 cm de côté. Optionnellement, l'écouvillon peut comprendre à l'extrémité de la tige opposée à l'embout de prélèvement une capsule à vis présentant une base et un montant annulaire généralement taraudé et s'étendant à partir de la périphérie de la base de manière substantiellement perpendiculaire à celle-ci et d'un seul côté. La tige est alors reliée à la capsule à vis par la base de manière à s'étendre du même côté que le montant annulaire.

Un opérateur doit généralement entrer à l'intérieur de la cuve industrielle pour y réaliser les prélèvements nécessaires. Or, les cuves industrielles, qui sont des espaces confinés, sont considérées comme des espaces dangereux et plusieurs accidents mortels, y compris dans l'industrie pharmaceutique, ont déjà eu lieu.

C'est pourquoi, afin d'assurer la sécurité des intervenants, les opérations de prélèvement nécessitent une grosse mobilisation du personnel : avant et après les opérations de prélèvement, mobilisation des services techniques pour la consignation et déconsignation des équipements ; pendant les opérations de prélèvement, mobilisation d'un surveillant formé aux interventions en espace confiné et d'un intervenant également formé et ayant une aptitude médicale lui permettant de descendre en espace confiné. Ces opérations nécessitent également la mobilisation de moyens importants tels que les services administratifs pour la rédaction d'un permis de pénétrer en espace confiné validé par un responsable de zone, une équipe HSE (hygiène, sécurité, environnement en industrie), le surveillant et l'intervenant et pour la rédaction d'une demande de consignation et de déconsignation validée par les services techniques, le responsable de zone, le service HSE et l'intervenant ; des moyens matériels tels qu'une échelle de corde pour l'entrée de l'intervenant dans la cuve préalablement décontaminée, un baudrier pour l'intervenant, une longe accrochée au baudrier de l'intervenant et reliée au surveillant, un dispositif antichute en cas de malaise de l'intervenant, un système avec poulie pour remonter une victime (y compris l'intervenant) jusqu'au dôme de la cuve, un oxygénomètre portatif et éventuellement un masque à induction d'air pour l'intervenant. Ainsi, ces opérations mobilisent au moins 4 à 5 personnes et sont chronophages.

Des méthodes sans descente humaine sont employées dans certaines industries telles que l'industrie pharmaceutique. Ces méthodes utilisent une canne de prélèvement tenue à une de ces extrémités par l'intervenant positionné à l'extérieur de la cuve et à l'autre extrémité de laquelle un écouvillon est fixé. La canne de prélèvement est télescopique et comprend typiquement une perche au bout de laquelle est fixé un adaptateur angulaire ayant deux bras montés à rotation l'un par rapport à l'autre. Un des bras sert à la fixation à la perche et l'autre bras à recevoir un insert de fixation de l'écouvillon.

L'utilisation de la canne de prélèvement permet d'éviter la descente humaine pour réaliser le prélèvement. Cependant, la manipulation de la canne n'est pas aisée.

En effet, l'intervenant qui est descendu dans la cuve réalise le prélèvement bactériologique en passant l'embout de prélèvement de l'écouvillon sur la surface de manière à couvrir une surface d'environ 5 cm sur 5 cm. Le passage de l'embout sur la surface est généralement effectué par des mouvements de va-et-vient suivant une première direction tout d'abord, puis, lorsque l'ensemble de la surface est couverte, par des mouvements de va-et-vient suivant une deuxième direction perpendiculaire à la première direction. Par ailleurs, dans le cas d'un embout de révolution, tout en passant celui-ci sur la surface, l'intervenant lui confère un mouvement de rotation autour d'un axe formé par la tige de l'écouvillon.

Il est facilement compréhensible que de tels mouvements ne sont guère aisés à appliquer à un écouvillon disposé à un adaptateur coudé à une extrémité d'une perche que l'on manipulerait par l'autre extrémité. Les auteurs ont effectué des essais avec une canne de prélèvement. Le mouvement à appliquer à l'écouvillon était difficilement réalisable et le geste non répétable.

L'arrière-plan technologique est décrite en outre par les documents suivants : US 2015/377746 A1, US 3841973 A, GB 2274719 A, FR 2677925 A1, EP 1054188 A2 et WO 89/11634 A1.

**Exposé de l'invention**

Un objectif de l'invention est de pallier au moins un des inconvénients de l'état de la technique.

Pour cela, la présente invention propose un module de prélèvement sur une surface d'une cuve industrielle sans descente humaine dans la cuve industrielle à l'aide d'un écouvillon comprenant une tige et un embout de prélèvement selon la revendication 1.

D'autres éléments de l'invention sont définis dans les revendications dépendantes 2-12.

Le module de prélèvement comprend notamment un porte-écouvillon et un transporteur ;

le porte-écouvillon étant adapté pour la réception et la fixation d'une extrémité de la tige de l'écouvillon ; et
le transporteur étant configuré pour mettre le porte-écouvillon en mouvement à la surface de la cuve.

Le transporteur est configuré pour mettre le porte-écouvillon en mouvement de translation suivant un ou deux axes parallèles à la surface, notamment deux axes perpendiculaires entre eux.

Ce module de prélèvement permet un prélèvement par écouvillon automatisé permettant d'appliquer le mouvement souhaité à l'écouvillon lors du prélèvement. Par ailleurs, les tests réalisés démontrent que le geste est répétable. Ceci supprime la nécessité de faire descendre un intervenant à l'intérieur de la cuve industrielle.

D'autres caractéristiques optionnelles et non limitatives sont les suivantes.

Le transporteur peut comprendre un premier moteur pour le déplacement du porte-écouvillon selon un premier axe de déplacement parallèle à la surface et un deuxième moteur pour le déplacement du porte-écouvillon selon un deuxième axe de déplacement parallèle à la surface et non-colinéaire au premier axe de déplacement, de préférence perpendiculaire à celui-ci.

Le porte-écouvillon peut être adapté de sorte que lorsque l'écouvillon y est logé, la tige de l'écouvillon définit un axe. Auquel cas, le transporteur peut également être configuré pour mettre le porte-écouvillon en rotation autour de l'axe de la tige.

Le transporteur peut comprendre en outre un moteur de mise en rotation du porte-écouvillon autour de l'axe longitudinal.

Le transporteur peut être configuré pour mettre en mouvement le porte-écouvillon suivant un cycle prédéfini.

Le module peut comprendre en outre un capteur de contact de l'embout configuré pour détecter le contact de l'embout de prélèvement avec la surface.

Le module peut comprendre en outre au moins trois pieds et un capteur de positionnement configuré pour détecter le contact des trois pieds avec la surface.

**Brève description des dessins**

D'autres objectifs, caractéristiques et avantages apparaitront à la lecture de la description qui suit en référence aux dessins donnés à titre illustratif et non limitatif, parmi lesquels :

**Fig. 1**

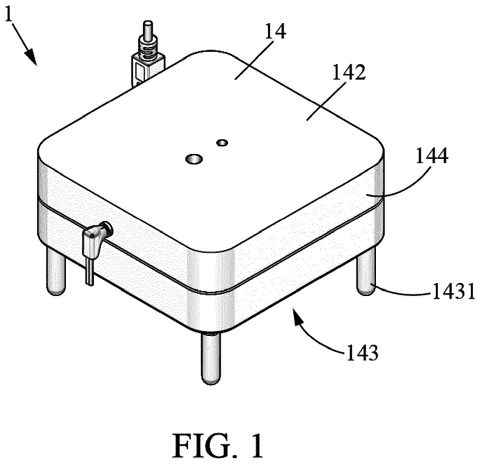

[Fig. 1] est une vue en perspective d'un module de prélèvement selon l'invention ;
**Fig. 2**

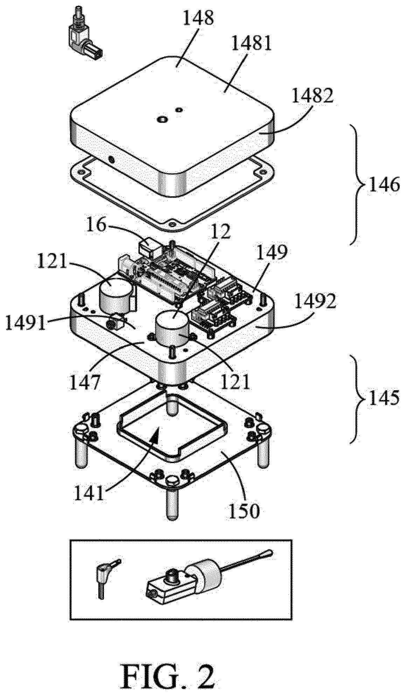

[Fig. 2] est une vue éclatée du module de prélèvement de la figure 1 sans l'ensemble de transmission ;
**Fig. 3**

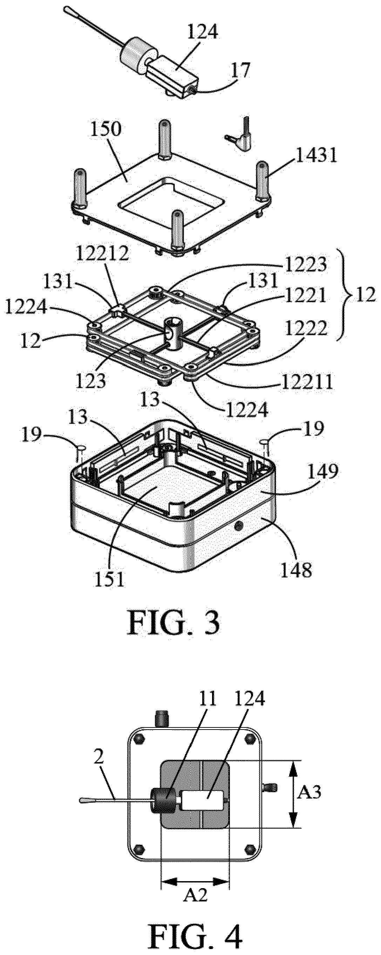

[Fig. 3] est une vue éclatée partielle du compartiment de transport du module de prélèvement de la figure 1 ;
**Fig. 4**
[Fig. 4] est une vue de dessous du module de prélèvement de la figure 1 ;
**Fig. 5**

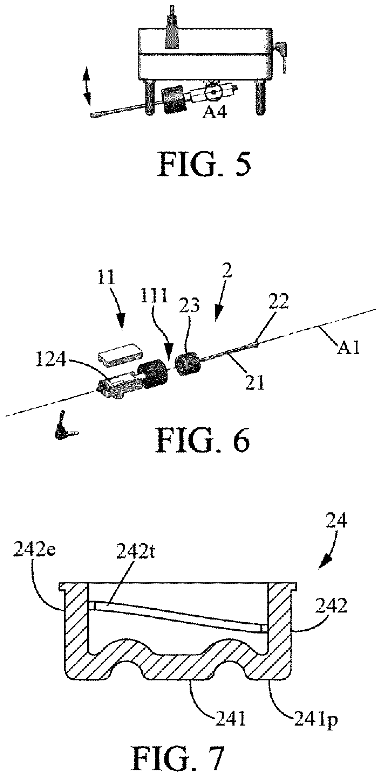

[Fig. 5] est une vue de côté du module de prélèvement de la figure 1 ;
**Fig. 6**
[Fig. 6] est une vue éclatée d'un porte-écouvillon avec l'écouvillon utilisable avec le module de prélèvement de la figure 1 ;
**Fig. 7**
[Fig. 7] est une vue en coupe d'une capsule à vis servant d'extrémité de fixation de l'écouvillon illustré à la figure 6 ; et
**Fig. 8**

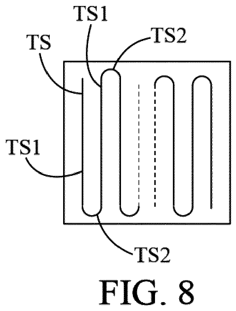

[Fig. 8] est un schéma de la trajectoire en serpentin que le module de prélèvement de la figure 1 peut appliquer à l'écouvillon.

**Présentation détaillée de l'invention**

Un module de prélèvement selon l'invention sera décrit plus en détail ci-après en référence aux figures 1 à 8.

Le module de prélèvement 1 est un module pour le prélèvement sur une surface d'une cuve industrielle sans descente humaine dans la cuve industrielle. Le prélèvement est réalisé à l'aide d'un écouvillon 2 comprenant une tige 21, un embout de prélèvement 22 à une première extrémité de la tige 21 et une extrémité de fixation 23 à l'autre extrémité (deuxième extrémité) de la tige 21 opposée à la première extrémité. L'extrémité de fixation 23 peut être simplement la deuxième extrémité de la tige ou une capsule à vis 24 attachée à cette deuxième extrémité (voir figure 7). Une capsule à vis 24 comprend typiquement une base 241 et une paroi annulaire 242 s'étendant à partir d'une périphérie 241p de la base 241, généralement perpendiculairement à celle-ci, et d'un seul côté. Lorsque la deuxième extrémité de la tige 21 est fixée à une telle capsule à vis 24, la tige s'étend du même côté de la base 241 que la paroi annulaire 242. La paroi annulaire 242 présente un taraudage 242t. La surface externe 242s de la paroi annulaire peut présenter un relief pour faciliter la préhension de la capsule à vis 24. Le relief est généralement une succession angulaire de rainures et de nervures s'étendant parallèlement les unes aux autres. La capsule à vis 24 dans ce type d'écouvillon 2 est généralement adaptée pour se visser sur un col d'un récipient au niveau d'une ouverture de celui-ci et dans lequel l'écouvillon 2, et notamment l'embout de prélèvement 22, est protégé.

Le module de prélèvement 1 comprend un porte-écouvillon 11 et un transporteur électrique 12.

Le porte-écouvillon 11 est adapté pour la réception et la fixation de l'extrémité de fixation 23 de l'écouvillon 2.

De préférence, le porte-écouvillon 11 présente un orifice 111 qui peut être borgne ou traversant et dont la section transverse est adaptée pour recevoir l'extrémité de fixation 23 de l'écouvillon. La fixation est alors de préférence réalisée par frottement entre les parois de l'orifice 111 et les parois de l'extrémité de fixation 23 de l'écouvillon.

Dans un mode de réalisation particulier, l'extrémité de fixation 23 de l'écouvillon est une capsule à vis 24. Auquel cas, le porte-écouvillon 11 comprend une base et une paroi annulaire s'étendant d'une périphérie de la base, généralement perpendiculaire à celle-ci, et d'un seul côté formant une section longitudinale (coupant la base perpendiculairement à celle-ci) en U. La section transversale de la paroi annulaire du porte-écouvillon 11 présente la même forme que la section transversale de la paroi annulaire 242 de la capsule à vis 24 de sorte à pouvoir recevoir la capsule à vis 24 sans jeu.

Le porte-écouvillon 11 peut être réalisé en métal, plastique ou tout autre matériau inerte, approprié à un usage industriel, qui peut être nettoyé, aseptisé et n'émet pas de particules.

En outre, le porte-écouvillon 11 peut être adapté pour l'insertion de l'extrémité de fixation 23 de l'écouvillon 2 suivant un axe d'insertion A1, l'axe d'insertion A1 est l'axe de la tige 21 étant confondus. De préférence, le module de prélèvement 1 est fourni avec une pluralité de porte-écouvillons 11 qui sont alors interchangeables afin d'accommoder différents types d'écouvillons 2 en s'adaptant aux formes et dimensions de l'extrémité de fixation 23. Dans ce cas, chaque porte-écouvillon 11 de la pluralité de porte-écouvillons comprend un élément de couplage et le module de prélèvement 1 comprend également un élément de couplage pour la fixation du porte-écouvillon 11 choisi. L'élément de couplage des porte-écouvillons 11 peut être par exemple une broche et celui du module de prélèvement 1 un orifice (borgne ou traversant) pour l'insertion de la broche. Alternativement, l'élément de couplage des porte-écouvillons 11 comprend un orifice (borgne ou traversant) et le module de prélèvement 1 une broche. La fixation d'un porte-écouvillon 11 dans le module de prélèvement 1 peut être réalisée par différents moyens de fixation réversible, par exemple, vissage, clipsage ou frottement.

Le transporteur 12 est configuré pour mettre le porte-écouvillon 11 en mouvement à la surface de la cuve.

En outre, le transporteur 12 est configuré pour mettre le porte-écouvillon 11 en mouvement parallèle à la surface, notamment pour mettre le porte-écouvillon 11 en mouvement de translation suivant un ou deux axes A2, A3 parallèles à la surface, non colinéaires entre eux et généralement perpendiculaires entre eux.

Pour cela, le transporteur 12 comprend un moteur 121 pour mettre le porte-écouvillon 11 en mouvement de translation suivant un axe A2 parallèle à la surface.

Le transporteur 12 comprend un ensemble de transmission 122 avec une barre de transport 1221, une première courroie annulaire 1222 et une deuxième courroie annulaire 1223. La barre de transport 1221 comprend une première extrémité 12211 fixée à la première courroie annulaire 1222 et une deuxième extrémité 12212 fixée à la deuxième courroie annulaire 1223.

L'ensemble de transmission 122 comprend également un jeu de quatre pignons 1224 disposés de sorte à former les coins d'un rectangle dont deux côtés sont parallèles à la barre de transport 1221 (appelés côtés parallèles) et deux sont perpendiculaires à celle-ci (appelés côtés perpendiculaires). La première courroie 1222 est disposée de manière à entourer deux des quatre pignons 1224 sur un des côtés perpendiculaires formant ainsi deux lignes parallèles, la première extrémité 12211 de la barre de transport 1221 étant fixé à la ligne la plus à l'intérieur du rectangle formé par les pignons 1224. La deuxième courroie 1223 est disposée de manière à entourer les quatre pignons 1224 ; soit au-dessus, soit en dessous de la première courroie 1222. Un des pignons est enfin couplé au moteur 121, les courroies 1222, 1223 transmettant le mouvement aux autres pignons 1224. L'ensemble de transmission 122 transforme alors le mouvement de rotation du moteur **121** en un mouvement de translation suivant un axe **A2** parallèle aux côtés perpendiculaires du rectangle. Le porte-écouvillon **11** est alors fixé à la barre de transport **1221,** par exemple avec celle-ci traversant le porte-écouvillon ou par l'intermédiaire d'un hub **123** configuré pour recevoir le porte-écouvillon **11,** le hub **123** étant traversé par la barre de transport **1221.**

Si le transporteur **12** est configuré pour mettre le porte-écouvillon **11** en mouvement de translation suivant un deuxième axe **A3** parallèle à la surface, alors il comprend un deuxième moteur **121** et un deuxième ensemble de transmission **122.** Les premier et deuxième ensembles de transmission **122** ayant la même composition mais positionnés à 90° l'un de l'autre. Le porte-écouvillon **11** est alors fixé aux deux barres de transport **1221** de manière à ce que celles-ci traversent le porte-écouvillon **11,** notamment l'une au-dessus de l'autre, ou par l'intermédiaire d'un hub **123** traversé par les barres de transport **1221,** notamment l'une au-dessus de l'autre.

En outre ou alternativement, le transporteur **12** peut être également configuré pour mettre le porte-écouvillon **11** en rotation autour de l'axe **A1** longitudinal que forme la tige **21** de l'écouvillon **2** lorsque l'extrémité de fixation **23** de l'écouvillon **2** est logée dans le porte-écouvillon **11.** Pour cela, le transporteur **12** peut comprendre un moteur **124** dont l'arbre est relié au porte-écouvillon **11** de manière à permettre une rotation de l'écouvillon **2** autour de l'axe **A1** longitudinal. En outre ou alternativement, le porte-écouvillon **11** peut comprendre un adaptateur doté d'un moteur pour mettre le porte-écouvillon **11** en rotation.

En outre ou alternativement, le transporteur **12** peut être configuré pour mettre le porte-écouvillon **11** en mouvement de rotation autour d'un axe **A4** orthogonal à l'axe **A1** longitudinal et parallèle à la surface à traiter. Par exemple, le transporteur **12** peut comprendre un moteur à cet effet. Ceci est notamment utile afin d'éviter que l'embout de prélèvement **22** ne touche une surface autre que la surface à traiter lors du positionnement du module de prélèvement **1.**

En outre ou alternativement le mouvement autour de l'axe **A4** est obtenu non pas grâce à un moteur mais en jouant sur la flexion de la tige de l'écouvillon **2.** Ainsi, le porte-écouvillon **11** adapté de manière à ce que, si en position normal d'utilisation l'axe **A4** parallèle à la surface se situe à une distance **h** de la surface, la distance **h** étant prise orthogonalement à la surface, et si l'axe de la tige de l'écouvillon forme un angle θ avec une droite orthogonal à la surface, on a :

[Math. 1]

$$L > \frac{h}{cos(\theta)}$$

(**E1**), avec L la longueur de l'écouvillon de l'axe **A4** à l'extrémité de l'embout de prélèvement.

Le porte écouvillon est alors monté sur ressort rotatif pour que lorsque le module de prélèvement est positionné sur la surface, la longueur de l'écouvillon satisfaisant l'inéquation (**E1**), la surface exerce une force sur l'embout de prélèvement faisant pivoter l'axe de la tige pour augmenter l'angle θ. Ceci assure le contact entre l'embout de prélèvement et la surface.

En outre ou alternativement, le transporteur **12** peut être configuré pour mettre en mouvement le porte-écouvillon **11** suivant un cycle prédéfini. Auquel cas, le cycle prédéfini peut comprendre une période où le mouvement du porte-écouvillon **11** (considéré sur la surface où le prélèvement est réalisé) suit une trajectoire en serpentin **TS** (voir figure 8), c'est-à-dire une trajectoire comprenant une pluralité de sections droites **TS1** parallèles dont le sens de déplacement est alterné, les sections droites **TS1** étant reliées entre elles deux à deux par des sections de connexion **TS2** courbes ou droites de sorte à former la trajectoire en serpentin **TS.** Le cycle prédéfini peut en outre comprendre une deuxième période où le mouvement suit également une trajectoire en serpentin, mais la direction des sections droites parallèles est perpendiculaire à celle de la première période. En outre, le cycle peut comprendre également une période pendant laquelle l'écouvillon est mis en rotation. Cette période peut être comprise dans la première période et/ou la deuxième période. Elle peut s'étaler sur l'entièreté d'au moins l'une de ces périodes.

De préférence, le cycle permet le balayage d'une surface de 1 à 50 cm², de préférence de 5 à 40 cm², de préférence environ 25 cm². Par exemple le cycle permet le balayage d'une surface carrée ou rectangulaire. Dans le cas où le balayage est réalisée sur une surface carrée, celle-ci présente de préférence des côtés compris entre 1 et 10 cm, de préférence entre 3 et 8 cm, de préférence environ 5 cm. De préférence, le cycle permet le balayage d'une surface conformément aux recommandations de la Pharmacopée européenne ou américaine en vigueur pour le prélèvement d'échantillons microbiologiques.

En outre ou alternativement, le transporteur **12** peut être configuré pour envoyer un signal de fin de prélèvement à la fin du cycle prédéfini. Ce signal peut être un signal sonore ou visuel. Ce signal peut encore être un signal numérique envoyé à un autre module d'une canne de prélèvement comme décrit ci-après.

Le module de prélèvement **1** peut comprendre outre un premier capteur **19** de contact configuré pour détecter le contact du module de prélèvement **1** avec la cuve. Par exemple le premier capteur **19** peut être un capteur de pression.

Le capteur de pression peut être disposé en butée contre des plots **1431** décrit plus loin, notamment dans un capot intermédiaire **149** décrit plus en détail ci-après. De préférence, il y a deux de capteurs de pression diamétralement opposés par rapport à au centre du module de prélèvement 1.

Le module de prélèvement **1** peut en outre comprendre un deuxième capteur de contact configuré pour détecter le contact de l'embout de prélèvement **22** avec la surface. En effet, un mauvais contact de l'embout de prélèvement **22** avec la surface peut entrainer une erreur dans la comptabilisation des microorganismes présents sur la surface. Chacun des capteurs de contact **13** peut être optique ou mécanique. Chacun des capteurs de contact peut comprendre un indicateur, par exemple un voyant électrique, indiquant l'existence et/ou l'absence du contact. En outre ou alternativement, le contact du module de prélèvement **1** avec la cuve et/ou le contact de l'embout de prélèvement **22** avec la surface peu(ven)t être indiqué(s) par un ou plusieurs indicateurs, par exemple des voyants, avantageusement figurant sur un autre élément de la canne de prélèvement. Également ou alternativement, chacun des capteurs de contact peut être configuré pour générer un signal électrique de contact indiquant la réalisation et/ou l'absence du contact.

Le module de prélèvement **1** peut en outre comprendre un capteur de position **13** du transporteur **12**. Par exemple, le capteur de position est disposé en face d'une des extrémités de la barre de transport **1221** pour suivre les déplacements de celle-ci. Notamment quand il y a deux ensembles de transmission, un premier capteur de position est disposé en face d'une des extrémités de la barre de transport **1221** du premier ensemble de transmission, le premier capteur de position s'étendant parallèlement à l'axe **A2** ; et un deuxième capteur de position est disposé en face d'une des extrémités de la barre de transport **1221** du deuxième ensemble de transmission, le deuxième capteur de position s'étendant parallèlement à l'axe **A3**. Le ou les capteurs de position peuvent être des capteurs magnétiques. L'extrémité de la barre de transmission correspondante en face du capteur de position est alors dotée d'un aimant **131**.

Le module de prélèvement **1** peut comprendre un boitier **14** renfermant le transporteur **12**, le porte-écouvillon **11** et le ou les capteurs de contact **13** si celui-ci ou ceux-ci sont prévus. Le boitier **14** présente une ouverture **141** en regard duquel le porte-écouvillon **11** est disposé. Ainsi, l'extrémité de fixation **23** de l'écouvillon **2** est insérée dans le porte-écouvillon **11** par l'ouverture **141**. L'ouverture **141** permet éventuellement le déplacement de l'écouvillon **2**. Alternativement, le porte-écouvillon **11** peut projeter de l'intérieur du boitier **14** vers l'extérieur par l'ouverture **141**.

Le boitier **14** présente typiquement une face supérieure **142**, une face inférieure **143** opposée à la face supérieure **142** et une paroi latérale **144**. La face supérieure **142** et la face inférieure **143** sont nommées par rapport à une position de fonctionnement dans laquelle la surface à traiter est horizontale et tournée vers le haut.

Dans un mode de réalisation, l'ouverture **141** est réalisée sur la paroi latérale **144**. Dans un deuxième mode de réalisation, l'ouverture **141** est réalisée sur la face inférieure **143**. Auquel cas, l'ouverture **141** peut être de forme carrée (éventuellement à coins arrondis), notamment de côté faisant entre 1 et 50 mm.

La face inférieure **143** peut comprendre des plots **1431** servant de pieds, au nombre par exemple de 3, 4, 5, 6, 7, 8, etc. Les plots **1431** peuvent être en un matériau élastomère. Alternativement, les pieds **1431** sont formés de matière avec la face distale et recouverts d'un matériau élastomère. Le matériau élastomère est préférentiellement de la silicone ou de l'éthylène-propylène-diène monomère.

De préférence, la forme extérieure du boitier **14** est convexe afin d'éviter toute zone de rétention. Par exemple, la forme générale du boitier **14** est un parallélépipède avec des sommets et arrêtes arrondis.

De préférence, le boitier **14** présente une surface lisse, notamment ayant une rugosité de surface comprise entre 0,1 et 5 mm, afin notamment d'éviter la stagnation de poussières ou autres contaminants sur la surface du robot et également d'en faciliter le nettoyage et l'aseptisation.

De préférence, le boitier **14** comprend un compartiment de déplacement **145** du côté de l'ouverture **141** et un compartiment électronique **146** ; les deux compartiments **145, 146** étant par exemple séparés par une paroi de séparation **147**. Par exemple dans le cas où l'ouverture **141** par laquelle passe le porte-écouvillon **11** est présente sur la paroi inférieure **143** du boitier **14**, le boitier **14** peut comprendre un capot supérieur **148**, un capot intermédiaire **149** et un capot inférieur **150**. Le capot supérieur **148** peut être réalisé de manière à se superposer au capot intermédiaire **149** en s'y emboitant. De même, le capot intermédiaire **149** peut être réalisé de manière à se superposer au capot inférieur **150** en s'y emboitant. Le capot supérieur **148** est de préférence formé d'une base **1481** plane, par exemple de forme rectangulaire, de préférence carrée, et une paroi latérale **1482** s'étendant à partir des bords de la base **148** et généralement perpendiculairement à celle-ci. Le capot intermédiaire **149** est de préférence formé de la même manière que le capot supérieur **149**. Les parois latérales **1482, 1492** des capots supérieur **148** et intermédiaire **149** s'emboitent de manière à ce que leurs surfaces affleurent l'une l'autre. Le capot inférieur **150** présente une forme généralement plane avec l'orifice **141**, de préférence de forme rectangulaire, voire carrée. L'espace formé entre le capot supérieur **148** et le capot intermédiaire **149** forme le compartiment électronique **146** et l'espace formé entre le capot intermédiaire **149** et le capot inférieur **150** le compartiment de déplacement **145**.

Le compartiment de déplacement **145** loge par exemple le transporteur **12** à l'exception des moteurs **121** de translation et le porte-écouvillon **11**. Le compartiment électronique **146** loge par exemple des moteurs **121** de translation, circuit imprimé et autre composants électroniques nécessaires au fonctionnement du module de prélèvement 1. Auquel cas, le boitier **14** comprend avantageusement un revêtement antifriction **151** dans le compartiment de déplacement **145** disposé et conçu pour diminuer les forces de frottement entre le porte-écouvillon **11** ou le hub **123** et les autres éléments compris dans le compartiment de déplacement **145** ou entre le porte-écouvillon **11** ou le hub **123** et la paroi de séparation **147.**

Le module de prélèvement **1** peut être alimenté en énergie électrique par piles ou batteries. Le module de prélèvement **1** est de préférence alimenté en énergie électrique par connexion au secteur. Pour cela, le module de prélèvement **1** comprend un connecteur **16** pour la connexion filaire au secteur ou à une autre source d'alimentation. Le connecteur **16** alimente notamment le transporteur **12,** de préférence le ou les moteurs **121** de translation parallèle à la surface à traiter. En outre, le connecteur **16** peut également alimenter le moteur **124** de rotation.

Alternativement, un deuxième connecteur **17** est prévu sur le moteur **124** de rotation pour l'alimentation de celui-ci soit par connexion au secteur ou à une autre source d'alimentation.

Le module de prélèvement **1** peut faire partie d'un ensemble appelé canne de prélèvement **10** comprenant en outre une perche.

La perche est de préférence une perche télescopique avec une extrémité de prélèvement connectable au module de prélèvement **1** sur une connexion **18** de celui-ci, et une extrémité de préhension opposée à l'extrémité de prélèvement. À son extrémité de préhension peut être prévue une poignée de préhension pour la sécurité de la manipulation et éventuellement pour le confort de l'utilisateur.

La canne de prélèvement peut comprendre en outre une commande fixée sur l'extrémité de préhension de la perche. La commande permet à l'opérateur de manipuler le module de prélèvement. La commande comprend une interface homme-machine, par exemple des boutons, des manettes, des interrupteurs, ou un écran tactile.

La commande peut également être configurée pour recevoir différentes informations.

Par exemple, la commande peut recevoir le signal numérique envoyé par le transporteur **12.** Ce signal numérique peut comprendre une information de fin de prélèvement. La commande peut encore recevoir le signal électrique de contact envoyé par le capteur de contact quand celui-ci est prévu et quand celui-ci est configuré pour envoyer un tel signal.

La commande peut comprendre une imprimante portative configurée pour imprimer un rapport de prélèvement. L'imprimante portative peut également imprimer sur le rapport toute information relative au prélèvement (date, heure, identité de la cuve, identité du préleveur, confirmation que l'outil est bien resté en contact avec la cuve pendant toute la durée du prélèvement etc.)

La commande peut comprendre un voyant lumineux, par exemple une diode électroluminescente, notamment pour indiquer l'état de la canne de prélèvement et/ou du module de prélèvement.

La commande peut également comprendre un afficheur, par exemple un écran LCD. L'afficheur permet de transmettre à l'opérateur des informations sur le prélèvement en temps réel. De préférence, l'afficheur est fixé sur l'extrémité de préhension de la perche.

Le module de prélèvement et la commande peuvent être connectés électriquement entre eux par câbles passant de préférence dans la perche. Alternativement, le module de prélèvement et la commande peuvent être connectés entre eux par réseau sans fil, tel que Bluetooth® ou Wi-Fi.

La commande peut constituer une source d'alimentation et est connectable notamment à la connexion du boitier pour son alimentation. Auquel cas, le câble utilisé pour l'alimentation peut également servir pour la transmission d'information entre le module de prélèvement et la commande.

De préférence, la perche et le module de prélèvement sont démontables l'un de l'autre pour faciliter leur entretien. Également, lorsque le module de contrôle est prévu, celui-ci peut être démontable de la perche.

La canne de prélèvement peut en outre comprendre un adaptateur angulaire à rotule à fixer entre la perche et le module de prélèvement. L'adaptateur angulaire offre une plus grande flexibilité dans la manipulation du module de prélèvement afin de pouvoir atteindre toutes les zones de la cuve industrielle.

La canne de prélèvement peut être alimentée par secteur. Dans ce cas, elle peut comprendre en outre une prise. Alternativement, la canne de prélèvement est alimentée par batterie.

**Revendications**

1. Module de prélèvement (1) sur une surface d'une cuve industrielle sans descente humaine dans la cuve industrielle à l'aide d'un écouvillon (2) comprenant une tige (21) et un embout de prélèvement (22), comprenant un porte-écouvillon (11) et un transporteur (12) ;

   le porte-écouvillon étant adapté pour la réception et la fixation d'une extrémité de la tige de l'écouvillon ; et
   le transporteur étant configuré pour mettre le porte-écouvillon en mouvement à la surface de la cuve ;

      dans lequel le transporteur est configuré pour mettre le porte-écouvillon en mouvement de translation suivant un ou deux axes parallèles (A2, A3) à la surface, notamment deux axes perpendiculaires entre eux ;

dans lequel le transporteur comprend un moteur (121) et un ensemble de transmission (122) pour le déplacement du porte-écouvillon selon un premier axe (A2) de déplacement parallèle à la surface ; **caractérisé en ce que** l'ensemble de transmission comprend une première courroie annulaire (1222), une deuxième courroie annulaire (1223), un jeu de quatre pignons (1224) disposés de sorte à former les coins d'un rectangle, et une barre de transport (1221) à laquelle est fixé le porte-écouvillon et dont une première extrémité (12211) est fixée à la première courroie annulaire et une deuxième extrémité (12212) est fixée à la deuxième courroie annulaire (1223) de sorte à ce que la barre de transport soit parallèle à deux côtés opposés du rectangle formé par le jeu de quatre pignon ;

dans lequel la première courroie est disposée de manière à entourer deux pignons sur un des côtés du rectangle perpendiculaire à la barre de transport formant ainsi deux lignes parallèles, la première extrémité de la barre de transport étant fixé à la ligne la plus à l'intérieur du rectangle ; et

dans lequel la deuxième courroie est disposée de manière à entourer les quatre pignons; et dans lequel un des pignons est couplé au moteur.

2. Module selon la revendication 1, dans lequel le transporteur comprend un deuxième moteur (121) et un deuxième ensemble de transmission (122) pour le déplacement du porte-écouvillon selon un deuxième axe (A3) de déplacement parallèle à la surface ;

le deuxième ensemble de transmission comprenant une première courroie annulaire (1222), une deuxième courroie annulaire (1223), un jeu de quatre pignons (1224) disposés de sorte à former les coins d'un rectangle, et une barre de transport (1221) à laquelle est fixé le porte-écouvillon et dont une première extrémité (12211) est fixée à la première courroie annulaire et une deuxième extrémité (12212) est fixée à la deuxième courroie annulaire (1223) de sorte à ce que la barre de transport soit parallèle à deux côtés opposés du rectangle formé par le jeu de quatre pignon ;

dans lequel la première courroie est disposée de manière à entourer deux pignons sur un des côtés du rectangle perpendiculaire à la barre de transport formant ainsi deux lignes parallèles, la première extrémité de la barre de transport étant fixé à la ligne la plus à l'intérieur du rectangle ;

dans lequel la deuxième courroie est disposée de manière à entourer les quatre pignons ;

dans lequel la barre de transport de l'ensemble de transmission est perpendiculaire à la barre de transport du deuxième ensemble de transmission.

3. Module selon la revendication 1 ou la revendication 2, dans lequel le porte-écouvillon est traversé par la barre de transport ou les barres de transport.

4. Module selon la revendication 1 ou la revendication 2, comprenant en outre un hub (123) configuré pour recevoir le porte-écouvillon et traversé par la barre de transport ou les barres de transports.

5. Module selon l'une des revendications précédentes, dans lequel le porte-écouvillon est adapté de sorte que lorsque l'écouvillon y est logé, la tige de l'écouvillon définit un axe (A1) ; et dans lequel le transporteur est également configuré pour mettre le porte-écouvillon en rotation autour de l'axe de la tige.

6. Module selon la revendication 5, dans lequel le transporteur comprend en outre un moteur (124) de mise en rotation du porte-écouvillon autour de l'axe longitudinal que forme la tige (21) de l'écouvillon (2) lorsque l'extrémité de la tige de l'écouvillon (2) est logée dans le porte-écouvillon (11).

7. Module selon l'une des revendications précédentes, dans lequel le transporteur est configuré pour mettre en mouvement le porte-écouvillon suivant un cycle prédéfini.

8. Module selon l'une des revendications précédentes, comprenant en outre un capteur (19) de contact de l'embout configuré pour détecter le contact de l'embout de prélèvement avec la surface.

9. Module selon l'une des revendications précédentes, comprenant en outre au moins trois pieds (1431) et un capteur de positionnement configuré pour détecter le contact des trois pieds avec la surface.

10. Module selon l'une des revendications précédentes, comprenant un boitier (14) renfermant le transporteur, le porte-écouvillon et, le cas échéant, le ou les capteurs de contact ;

le boitier présentant une ouverture (141) en regard duquel le porte-écouvillon est disposé de sorte que le porte-écouvillon est disposé à l'intérieur du boitier ou projette de l'intérieur du boitier vers l'extérieur par l'ouverture ; le boitier présentant une face supérieure (142), une face inférieure (143) opposée à la face supérieure et une paroi latérale.

11. Module selon la revendication 10, dans lequel le boitier présente une surface lisse dont la rugosité est comprise entre 0,1 et 5 mm.

12. Canne de prélèvement pour prélèvement sur une surface d'une cuve industrielle sans descente humaine dans la cuve industrielle à l'aide d'un écouvillon comprenant une tige et un embout de prélèvement, la canne comprenant une perche et un module selon l'une des revendications précédentes, le module comprenant en outre une fixation pour la fixation à une extrémité de la perche.

**Patentansprüche**

1. Modul zur Probennahme (1) von einer Oberfläche eines Industriebehälters ohne Abstieg einer Person in den Industriebehälter mit Hilfe eines Tupfers (2), der einen Schaft (21) und eine Entnahmespitze (22) umfasst, umfassend einen Tupferhalter (11) und einen Förderer (12);

   wobei der Tupferhalter zur Aufnahme und Befestigung eines Endes des Schafts des Tupfers ausgebildet ist; und wobei der Förderer dazu ausgebildet ist, den Tupferhalter an der Oberfläche des Behälters in Bewegung zu setzen;
   wobei der Förderer dazu ausgebildet ist, den Tupferhalter in eine Translationsbewegung entlang einer oder zwei zur Oberfläche parallelen Achsen (A2, A3) zu versetzen, insbesondere entlang zwei senkrecht zueinanderstehenden Achsen;
   wobei der Förderer einen Motor (121) und eine Getriebeanordnung (122) zum Bewegen des Tupferhalters entlang einer ersten Bewegungsachse (A2) parallel zur Oberfläche umfasst; **dadurch gekennzeichnet, dass** die Getriebeanordnung einen ersten Ringriemen (1222), einen zweiten Ringriemen (1223) sowie einen Satz von vier Zahnkränzen (1224) umfasst, die derart angeordnet sind, dass sie die Ecken eines Rechtecks bilden, und eine Transportstange (1221), an der der Tupferhalter befestigt ist und deren erstes Ende (12211) an dem ersten Ringriemen und deren zweites Ende (12212) an dem zweiten Ringriemen (1223) derart befestigt ist, dass die Transportstange parallel zu zwei gegenüberliegenden Seiten des durch den Satz von vier Zahnkränzen gebildeten Rechtecks verläuft;
   wobei der erste Riemen derart angeordnet ist, dass er zwei Zahnräder auf einer der Seiten des Rechtecks senkrecht zur Transportstange umschließt, wodurch zwei parallele Linien gebildet werden, wobei das erste Ende der Transportstange an der am weitesten inneren Linie des Rechtecks befestigt ist; und
   wobei der zweite Riemen derart angeordnet ist, dass er die vier Zahnräder umschließt; und wobei eines der Zahnräder mit dem Motor gekoppelt ist.

2. Modul nach Anspruch 1, wobei der Förderer einen zweiten Motor (121) und eine zweite Getriebeanordnung (122) zum Bewegen des Tupferhalters entlang einer zweiten Bewegungsachse (A3) parallel zur Oberfläche umfasst; wobei die zweite Getriebeanordnung einen ersten Ringriemen (1222), einen zweiten Ringriemen (1223) sowie einen Satz von vier Zahnkränzen (1224) umfasst, die derart angeordnet sind, dass sie die Ecken eines Rechtecks bilden, und eine Transportstange (1221), an der der Tupferhalter befestigt ist und deren erstes Ende (12211) an dem ersten Ringriemen und deren zweites Ende (12212) an dem zweiten Ringriemen (1223) derart befestigt ist, dass die Transportstange parallel zu zwei gegenüberliegenden Seiten des durch den Satz von vier Zahnkränzen gebildeten Rechtecks verläuft;

   wobei der erste Riemen derart angeordnet ist, dass er zwei Zahnräder auf einer Seite des Rechtecks senkrecht zur Transportstange umschließt, wodurch zwei parallele Linien gebildet werden, wobei das erste Ende der Transportstange an der am weitesten inneren Linie des Rechtecks befestigt ist;
   wobei der zweite Riemen derart angeordnet ist, dass er die vier Zahnräder umschließt;
   wobei die Transportstange der Getriebeanordnung senkrecht zur Transportstange der zweiten Getriebeanordnung steht.

3. Modul nach Anspruch 1 oder Anspruch 2, wobei die Transportstange oder die Transportstangen durch den Tupferhalter verlaufen.

**4.** Modul nach Anspruch 1 oder Anspruch 2, ferner umfassend einen Hub (123), der dazu ausgebildet ist, den Tupferhalter aufzunehmen und der von der Transportstange oder den Transportstangen durchlaufen wird.

**5.** Modul nach einem der vorhergehenden Ansprüche, wobei der Tupferhalter derart angepasst ist, dass, wenn der Tupfer darin aufgenommen ist, der Schaft des Tupfers eine Achse (A1) definiert, und wobei der Förderer auch dazu ausgebildet ist, den Tupferhalter um die Achse des Schafts rotieren zu lassen.

**6.** Modul nach Anspruch 5, wobei der Förderer ferner einen Motor (124) zum Drehen des Tupferhalters um die Längsachse umfasst, die der Schaft (21) des Tupfers (2) bildet, wenn das Ende des Schafts des Tupfers (2) in dem Tupferhalter (11) aufgenommen ist.

**7.** Modul nach einem der vorhergehenden Ansprüche, wobei der Förderer dazu ausgebildet ist, den Tupferhalter gemäß einem vordefinierten Zyklus in Bewegung zu setzen.

**8.** Modul nach einem der vorhergehenden Ansprüche, ferner umfassend einen Sensor (19) für den Spitzenkontakt, der dazu ausgebildet ist, den Kontakt der Entnahmespitze mit der Oberfläche zu erfassen.

**9.** Modul nach einem der vorhergehenden Ansprüche, ferner umfassend wenigstens drei Füße (1431) und einen Positionssensor, der dazu ausgebildet ist, den Kontakt der drei Füße mit der Oberfläche zu erfassen.

**10.** Modul nach einem der vorhergehenden Ansprüche, umfassend ein Gehäuse (14), das den Förderer, den Halter und gegebenenfalls den/die Kontaktsensor(en) umschließt;

wobei das Gehäuse eine Öffnung (141) aufweist, gegenüber welcher der Halter derart angeordnet ist, dass der Halter innerhalb des Gehäuses angeordnet ist oder aus dem Inneren des Gehäuses durch die Öffnung nach außen vorsteht;
wobei das Gehäuse eine Oberseite (142), eine gegenüber der Oberseite liegende Unterseite (143) und eine Seitenwand aufweist.

**11.** Modul nach Anspruch 10, wobei das Gehäuse eine glatte Oberfläche mit einer Rauigkeit zwischen 0,1 und 5 mm aufweist.

**12.** Probenahmestab zur Entnahme von Proben von einer Oberfläche eines Industriebehälters ohne Abstieg einer Person in den Industriebehälter mit Hilfe eines Tupfers, der einen Schaft und eine Entnahmespitze umfasst, wobei der Stab eine Stange und ein Modul nach einem der vorhergehenden Ansprüche umfasst, wobei das Modul ferner eine Befestigung zur Befestigung an einem Ende der Stange umfasst.

**Claims**

**1.** A module (1) for sampling from a surface of an industrial vessel without requiring a person to descend into the industrial vessel using a swab (2) comprising a stem (21) and a sampling tip (22), comprising a swab holder (11) and a conveyor (12);

the swab holder being adapted to receive and secure one end of the swab stem; and
the conveyor being configured to move the swab holder at the surface of the vessel;
wherein the conveyor is configured to move the swab holder in translational motion along one or two axis(axes) (A2, A3) parallel to the surface, in particular two axes perpendicular to each other;
wherein the conveyor comprises a motor (121) and a transmission assembly (122) for moving the swab holder along a first axis (A2) of travel parallel to the surface;
**characterized in that** the transmission assembly comprises a first annular belt (1222), a second annular belt (1223), a set of four pinions (1224) disposed so as to form the corners of a rectangle, and a conveyor bar (1221) to which the swab holder is secured and a first end (12211) of which is secured to the first annular belt and a second end (12212) is secured to the second annular belt (1223) so that the conveyor bar is parallel to two opposite sides of the rectangle formed by the set of four pinions;
wherein the first belt is disposed so as to surround two pinions on one of the sides of the rectangular perpendicular to the conveyor bar thereby forming two parallel lines, the first end of the conveyor bar being secured to the innermost line within the rectangle; and

wherein the second belt is disposed so as to surround the four pinions; and wherein one of the pinions is coupled to the motor.

2. The module according to claim 1, wherein the conveyor comprises a second motor (121) and a second transmission assembly (122) for moving the swab holder along a second axis (A3) of travel parallel to the surface;

the second transmission assembly comprising a first annular belt (1222), a second annular belt (1223), a set of four pinions (1224) disposed so as to form the corners of a rectangle, and a conveyor bar (1221) to which the swab holder is secured and whose first end (12211) is secured to the first annular belt and a second end (12212) is secured to the second annular belt (1223) so that the conveyor bar is parallel to two opposite sides of the rectangle formed by the set of four pinions;
wherein the first belt is disposed so as to surround two pinions on one of the sides of the rectangle perpendicular to the conveyor bar thereby forming two parallel lines, the first end of the conveyor bar being secured to the line the innermost within the rectangle;
wherein the second belt is disposed so as to surround the four pinions; and
wherein the conveyor bar of the transmission assembly is perpendicular to the conveyor bar of the second transmission assembly.

3. The module according to claim 1 or claim 2, wherein the swab holder is crossed by the conveyor bar or the conveyor bars.

4. The module according to claim 1 or claim 2, further comprising a hub (123) configured to receive the swab holder and crossed by the conveyor bar or the conveyor bars.

5. The module according to any of the preceding claims, wherein the swab holder is adapted so that when the swab is housed therein, the stem of the swab defines an axis (A1); and wherein the conveyor is also configured to rotate the swab holder about the axis of the stem.

6. The module according to claim 5, wherein the conveyor further comprises a motor (124) for rotating the swab holder about the longitudinal axis formed by the swab stem (21) when the end of the swab stem is housed in the swab holder (11).

7. The module according to any of the preceding claims, wherein the conveyor is configured to move the swab holder according to a predefined cycle.

8. The module according to any of the preceding claims, further comprising a contact sensor (19) of the tip configured to detect contact of the sampling tip with the surface.

9. The module according to any of the preceding claims, further comprising at least three legs (1431) and a positioning sensor configured to detect contact of the three legs with the surface.

10. The module according to any of the preceding claims, comprising a casing (14) enclosing the conveyor, the swab holder and, where appropriate, the contact sensor(s);

the casing having an opening (141) opposite which the swab holder is disposed so that the swab holder is disposed inside the casing or projects from inside the casing outwardly through the opening;
the casing having an upper face (142), a lower face (143) opposite to the upper face and a sidewall.

11. The module according to claim 10, wherein the casing has a smooth surface whose roughness is comprised between 0.1 and 5 mm.

12. A sampling stick for sampling from a surface of an industrial vessel without requiring a person to descend into the industrial vessel using a swab comprising a stem and a sampling tip, the stick comprising a pole and a module according to any of the preceding claims, the module further comprising an attachment for securing to an end of the pole.

FIG. 1

**FIG. 2**

FIG. 3

FIG. 4

FIG. 5

FIG. 6

FIG. 7

FIG. 8

**RÉFÉRENCES CITÉES DANS LA DESCRIPTION**

**Documents brevets cités dans la description**

- US 2015377746 A1
- US 3841973 A
- GB 2274719 A
- FR 2677925 A1
- EP 1054188 A2
- WO 8911634 A1